(19) Europäisches Patentamt
European Patent Office
Office européen des brevets

(11) **EP 3 088 790 B1**

(12) **EUROPEAN PATENT SPECIFICATION**

(45) Date of publication and mention
of the grant of the patent:
**12.06.2019 Bulletin 2019/24**

(51) Int Cl.:
*F16N 29/02* [(2006.01)]     *F16C 33/66* [(2006.01)]
*F16C 19/38* [(2006.01)]

(21) Application number: **15165936.4**

(22) Date of filing: **30.04.2015**

(54) **METHOD OF BEARING RE-LUBRICATION**

VERFAHREN ZUR LAGERNACHSCHMIERUNG

PROCÉDÉ DE RELUBRIFICATION DE PALIERS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2016 Bulletin 2016/44**

(73) Proprietor: **Aktiebolaget SKF**
**415 50 Göteborg (SE)**

(72) Inventors:
• **Lugt, Piet**
**4132 AB Vianen (NL)**

• **Blachere, Sebastien**
**2596PB 2596PB (NL)**
• **Bongaerts, Jeroen**
**1233 GK Hilversum (NL)**

(74) Representative: **Schonecke, Mitja et al**
**SKF GmbH**
**Gunnar-Wester-Straße 12**
**97421 Schweinfurt (DE)**

(56) References cited:
**WO-A2-01/55634         DE-A1-102013 209 889
US-A1- 2012 221 153**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 3 088 790 B1

## Description

The present invention relates to the re-lubrication of grease-lubricated bearings, in which a re-lubrication interval for the bearing is calculated based on varying operating conditions of the bearing.

## BACKGROUND

Commonly, grease re-lubrication using automatic lubrication systems is time based, which means that lubricating grease is added to a mechanical system after a fixed time interval. The consequence of time-based lubrication is that the dosing volume and re-lubrication times are determined based on expected conditions, whereby the most adverse conditions that can be expected are often assumed for safety reasons. This is done to ensure that there is no shortage of lubricant in good condition.

The result is that many applications are over-lubricated. Fresh grease is added to a bearing even although the used grease may still have a useful service life. Also, too much grease may be added, leading to grease spillage, which has an environmental impact. Over-lubrication thus has economical drawbacks, in terms of the cost of the grease itself and the cost of grease disposal. Furthermore, in hard-to reach locations, such as off-shore wind turbines, it is expensive to deliver and also retrieve large volumes of lubricant.

US 2012/0221153 describes a method and system for establishing and executing correct automatic re-lubrication for a number of bearings connected to a grease lubrication system. The system determines initial values for the re-lubrication interval and/or lubricant volume utilizing data collected from the different bearing assemblies during operation.

There is still room for improvement, however, in terms of accurately estimating when a bearing that operates under varying conditions will require re-lubrication.

## SUMMARY OF THE INVENTION

The present invention defines a method of re-lubricating a grease-lubricated bearing arrangement that operates under varying conditions. The method comprises steps of determining a re-lubrication interval t* for the bearing arrangement and initiating a relubrication event, based on the determined re-lubrication interval t*. According to the invention, the step of determining comprises:

a) measuring an operating condition $C_{(i)}$ of the bearing at a series of time intervals;
b) recording an amount of time $\Delta t_{(i)}$ spent in each operating condition $C_{(i)}$ in the series;
c) using each operating condition $C_{(i)}$ in the series as an input to a grease life model, to estimate a re-lubrication interval $t_{lub}(i)$ or a reliability value $R_{(i)}$ associated with each operating condition $C_{(i)}$;
d) using each estimated re-lubrication interval $t_{lub}(i)$ or reliability value $R_{(i)}$ in the series and the associated amount of time $\Delta t_{(i)}$ to determine a value for t* that is based on the history of the measured conditions obtained since a reference time $t_0$ that is either zero or is the time at which a previous re-lubrication event occurred.

Thus, the determined lubrication interval t* is continuously updated, taking account of the varying operating conditions and the amount of time that is spent in each operating condition. This enables a more accurate determination of when the bearing arrangement will require re-lubrication.

In embodiments of the method where a series of reliability values are estimated, each reliability value $R_{(i)}$ is suitably estimated from a Weibull distribution for grease life that is associated with the corresponding operating condition $C_{(i)}$. A history-based reliability value R(t) is then calculated over the time t since the previous lubrication event, using each reliability value $R_{(i)}$ and the associated amount of time $\Delta t_{(i)}$. In effect, a cumulative probability of failure is calculated.

The determined re-lubrication interval t* may be set as the time at which the history-based reliability value R(t) reaches a predefined minimum reliability. Preferably, the minimum reliability is set at 0.99.

In an alternative example, the history-based Reliability value R(t) is extrapolated to predict the time t* at which R(t) will equal the predefined minimum value. The next lubrication event is then performed at the predicted time. Advantageously, the predicted time may be displayed on a display that is associated with the lubrication system that re-lubricates the bearing.

In embodiments of the method where a series of re-lubrication intervals $t_{lub}(i)$ are calculated for each operating condition, a grease life model is used in the calculation. Suitable examples include: the re-lubrication models validated by SKF (SKF Rolling Bearings Catalogue, AB SKF, Gothenburg, Sweden, 2012) or the model from the German Tribology Society GfT (GfT, Gesellschaft für Tribologie e.V. Arbeitsblatt 3, Wälzlagerschmierung, neue überarbeitete Auflage. Report, Gesellschaft für Tribologie e.V, September 2006. Other models may be used, such as described in "Grease Lubrication in Rolling Bearings" by Piet Lugt.

The series of calculated re-lubrication intervals $t_{lub}(i)$ and the associated amounts of time $\Delta t_{(i)}$ are then used to determine a history-based re-lubrication interval $t_{lub}(t)$ that is calculated over the time t since the reference time $t_0$. According to the invention, this history-based lubrication interval $t_{lub}(t)$ is calculated according to the following formula:

$$t_{lub}(t) = \frac{1}{\sum_{i=1}^{n} \frac{\Delta t_i / t}{t_{lub}(i)}}$$

A re-lubrication event takes place when the elapsed time since a previous event equals $t_{lub}(t)$.

In order to calculate the series of lubrication intervals $t_{lub}(i)$ or the series of reliability values R(i), bearing speed, load and temperature are necessary input parameters. Step a) of the method thus comprises measuring one or more of these parameters. As will be understood, in applications where e.g. bearing load remains constant, there is no need to measure this parameter.

In some embodiments of the invention, a prescribed volume $V_0$ of grease is added to the bearing arrangement in a single amount. Typically, the prescribed volume is equal to around 30% of the free volume within the bearing.

In preferred embodiments, the prescribed volume of grease is added to the bearing in a number N of individual doses $\Delta V$, whereby $N = V_0 / \Delta V$.

In one example, the individual doses are separated by a time interval $t_{int}$ which is calculated from the determined lubrication interval t* divided by the number N of doses. In this example, the reference time $t_0$ since the previous lubrication event is the time since the previous dose. The re-lubrication interval t* is thus determined over the time period between doses.

Preferably, the re-lubrication interval is calculated over a longer time period, to provide a more accurate determination of the bearing's re-lubrication requirement.

In a further example, the reference time $t_0$ is the time since the $N^{th}$ dose in the past. According to the invention, the next dose and each subsequent dose will then be delivered at the determined lubrication interval t*.

The method may comprise the measurement of further input parameters for determining the re-lubrication interval. For example, if particulate contaminants enter the bearing, vibration and acoustic emission will increase. These measured parameters may be used to adjust the re-lubrication interval, or a certain threshold may be defined which, if exceeded, triggers the replenishment of the bearing arrangement with fresh grease. Water content or the presence of other contaminants within the grease may also be measured directly, in order to determine the remaining service life of the grease and adjust the re-lubrication interval.

Furthermore, in embodiments of the method wherein grease is added to the bearing arrangement in separate dosing events, the method may advantageously comprises a step of monitoring an operating parameter X of the bearing that is indicative of grease churning. This operating parameter X is at least one of temperature, rotational speed, vibration and acoustic emission. If a change in measured values of the first operating parameter exceeds a predefined maximum rate $abs(dX/dt)_{max}$ prior to a scheduled dosing event, then the method comprises a step of delaying the dosing event.

The present inventors have discovered that churning can be detected by monitoring the above-mentioned parameters. When grease enters the rolling contacts in a bearing, friction increases, until the grease is smeared out evenly. The friction causes an increase in temperature and a decrease in speed. Furthermore, the grease dampens vibrations, thereby causing a decrease in an enveloped acceleration level. Acoustic emission also decreases.

In one example, bearing temperature is measured prior to a dosing event. If the temperature is increasing above a certain maximum rate of Y°C/min, this is indicative of churning. The addition of more fresh grease into the bearing arrangement would likely cause more churning and a further increase in temperature. Grease life is temperature dependent, and shortens with increasing temperature. Thus, in the method according to the further development, the added grease is prevented from overheating, thereby optimising grease life.

Other advantages of the present invention will become apparent from the following detailed description and accompanying figures.

DRAWINGS

The invention will now be described further, with reference to the following Figures, in which:

Figure. 1     shows a cross-sectional view of a bearing arrangement that is configured for re-lubrication with grease according to the method of the invention;

Figure 2a     shows a diagram of an embodiment of the inventive method in which re-lubrication interval is calculated based on varying operating conditions of the bearing;

Figure 2b     shows a graph of the development of the calculated re-lubrication interval as bearing operating conditions change;

DETAILED DESCRIPTION

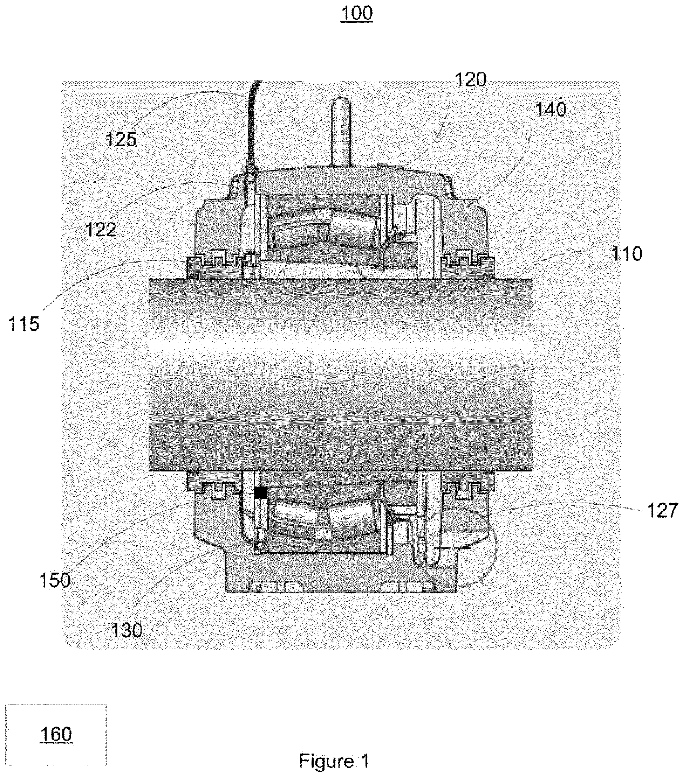

Figure 1 shows a cross-sectional view of an example of a bearing arrangement 100 that is configured for online re-lubrication. The arrangement comprises a rolling element bearing that rotationally supports a shaft 110 relative to a bearing housing 120. The rolling element bearing is a double-row spherical roller bearing in the depicted example. As will be understood, the method of the invention may be used for re-lubrication of any type of rolling element bearing, such as ball bearings, taper roller bearings etc. An outer ring 130 of the bearing is mounted in a bore of the housing 120 and an inner ring 140 of the bearing is mounted on the shaft 110. The housing 120 is provided with a grease supply inlet 122 for re-lubricating the bearing. A grease line 125 connects the supply inlet 122 to an automatic lubrication system (not shown) which may be a central lubrication for supplying grease to a number of bearings, or which may be a single-point lubrication device that provides a dedicated supply of grease to the depicted bearing.

The bearing arrangement is lubricated with a prescribed volume of grease $V_0$. In the depicted example, 30% of the free volume within the housing should be filled with grease. The grease has a certain grease life or service life during which the grease is able to provide an adequate supply of base oil for building an oil film that separates the rolling contacts of the bearings. In applications where re-lubrication is applied, a certain relubrication interval is prescribed. Commonly, the re-lubrication interval represents a service life of the grease after which only 1% of a tested population of bearings has failed.

In the method of the invention, the re-lubrication interval is calculated based on operating parameters of the bearing, which are measured and/or estimated over a certain time history. When the calculated interval has expired, a re-lubrication event is initiated. In one example, the lubrication event comprises replacing the used grease in the bearing arrangement 100 with the prescribed volume $V_0$ of fresh grease when the re-lubrication interval expires. To enable the used grease to exit the bearing arrangement, a grease escape outlet 127 is provided in the housing. Grease is also able to escape via seals 115 arranged between the shaft 110 and the housing 120.

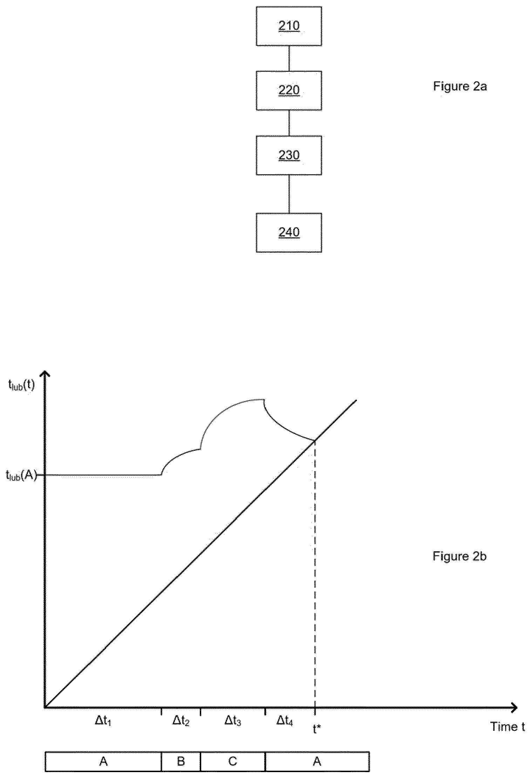

Figure 2 shows a diagram of an example of a method of relubrication according to the invention, applicable to the bearing arrangement in Figure 1. The bearing arrangement 100 is provided with a temperature sensor 150, which in the depicted example is a wireless temperature sensor 150 attached to the bearing inner ring 140. Other locations for the temperature sensor are, of course, possible. The temperature signal is sent to a processor 160 which in turn communicates with a controller (not shown) associated with the automatic lubrication system that executes the re-lubrication events. Let us assume that the last re-lubrication event occurred at a time $t_0$ which, for simplicity, is set to 0.

In a first step 210 of the method, the bearing operating conditions are recorded during a period from 0 to $t$ (any time $t$). A time series of operating conditions (i = 1 to $n$), up to time $t$, is thus obtained, whereby $C_i$ is the operating condition during the time interval $[t_{i-1}, t_i)$ for $i = 1$ to $n$, with $t_r = t$. The length of time $\Delta t_i$ spent in each operating condition is also recorded, whereby $\Delta t_i = t_i - t_{i-1}$

In the given example, bearing temperature is measured in step 210 and the duration spent in each measured temperature is recorded. We will assume that bearing load and speed are constant. Needless to say, in applications where load and speed are variable and cannot be estimated, the step of measurement may further comprise measuring bearing speed and load.

In a second step 220 of the method, a re-lubrication interval $t_{lub}(i)$ associated with each operating condition $C_i$ is calculated using a grease life model, such as described in the SKF General Catalogue, for example.

In a third step 230, a history-based re-lubrication interval $t_{lub}(t)$ is calculated at time t, according to the following formula:

$$t_{lub}(t) = \frac{1}{\sum_{i=1}^{n} \frac{\Delta t_i / t}{t_{lub}(i)}}$$

In a fourth step 240, a re-lubrication event is triggered at a time t*, whereby $t^* = \min \{t > 0 \text{ s.t } t_{lub}(t) = t\}$.

In other words, the history-based re-relubrication interval $t_{lub}(t)$ is continuously recalculated and a re-lubrication event is initiated when the recalculated value equals the elapsed time t (since $t_0$). This is illustrated by the graph of Figure 2b, whereby the x-axis represents the elapsed time since a previous lubrication event and the y-axis represents the history-based re-lubrication interval $t_{lub}(t)$.

We will assume that the bearing experiences only three different operating conditions A, B, and C, whereby A is high-temperature condition, B is a medium temperature condition and C is a low-temperature condition. As shown by the bar at the bottom of Figure 2b, we will assume that after a re-lubrication event, the bearing operates for a first period in condition A, then a second period in condition B, a third period in condition C and then returns to condition A. Each operating condition is associated with a particular relubrication interval: $t_{lub}(A), : t_{lub}(B), : t_{lub}(C)$, calculated using a suitable grease life model.

During the first period $\Delta t_1$, the re-lubrication interval associated with condition A is the only condition available for calculation of the history-based re-lubrication interval and so $t_{lub}(t)$ is equal to $t_{lub}(A)$. When the bearing then enters condition B and operates at a lower temperature, the calculated $t_{lub}(t)$ starts to increase during the second period $\Delta t_2$. Upon entering the low-temperature condition C, the history-based calculation $t_{lub}(t)$ continues to rise more steeply during the third period $\Delta t_3$. When the bearing returns to the high-temperature condition A, $t_{lub}(t)$ starts to fall, i.e. the re-lubrication interval becomes shorter. After a certain period of time $\Delta t_4$ spent in condition A, the calculated time for $t_{lub}(t)$ equals the elapsed time since the pervious re-lubrication event. At this time t*, the next relubrication event is initiated.

Advantageously, the continuously updated value that is calculated for $t_{lub}(t)$ may be displayed on e.g. the pump that is associated with the automatic lubrication system.

In a second embodiment of the inventive method, reliability values are used to determine when a next re-lubrication event should be performed. Again, the method comprises measuring a series of operating conditions $C_i$ of the bearing in which at least one operating parameter is measured. The amount of time spent in each condition is recorded.

Each operating condition $C_i$ is associated to a Weibull statistical distribution for the Grease life for the bearing arrangement in question. This Weibull distribution is characterized by two parameters $\eta_i$ (scale) and $\beta_i$ (shape).

For any time $t$, a sequence of reliability values $R_i$ ($i$ = 1 to $n$) is computed iteratively as follows:

$$R_1 = \exp\left[-\left(\frac{\Delta t_1}{\eta_1}\right)^{\beta_1}\right]$$

At the moment that condition $C_2$ is reached the reliability is still $R_1$ but the condition has changed to the condition $C_2$. The time interval $\Delta t_1$ is then modified to obtain a value $\Delta t_1^*$ corresponding to the time interval needed to reach the same reliability $R_1$ but under the condition $C_2$. This time interval $\Delta t_1^*$ is defined by the relation

$$\exp\left[-\left(\frac{\Delta t_1^*}{\eta_2}\right)^{\beta_2}\right] = \exp\left[-\left(\frac{\Delta t_1}{\eta_1}\right)^{\beta_1}\right]$$

so,

$$\frac{\Delta t_1^*}{\eta_2} = \left(\frac{\Delta t_1}{\eta_1}\right)^{\frac{\beta_1}{\beta_2}}$$

Then, $R_2$ (Reliability after $\Delta t_2$) is defined by

$$R_2 = \exp\left[-\left(\frac{\Delta t_1^* + \Delta t_2}{\eta_2}\right)^{\beta_2}\right] = \exp\left[-\left(\left(\frac{\Delta t_1}{\eta_1}\right)^{\frac{\beta_1}{\beta_2}} + \frac{\Delta t_2}{\eta_2}\right)^{\beta_2}\right]$$

In general, at time t = $t_n$,

$$R(t) = R_n = \exp\left[-\left[\frac{\Delta t_n}{\eta_n} + \left[\frac{\Delta t_{n-1}}{\eta_{n-1}} + \left[\frac{\Delta t_{n-2}}{\eta_{n-2}} + \cdots\right]^{\frac{\beta_{n-2}}{\beta_{n-1}}}\right]^{\frac{\beta_{n-1}}{\beta_n}}\right]^{\beta_n}\right]$$

A re-lubrication event is decided at time $t^*$ defined by

$$t^* = t \text{ s.t. } R(t^*) = 0.99$$

In other words, when the reliability function reaches a minimum value, a re-lubrication event is triggered. In grease life calculations, 0.99 is the commonly used minimum value

It should be noted that under the hypothesis that the shape parameter $\beta$ is constant over the different operating conditions (for any $i$, $\beta_i = \beta$), the methods of the first and second embodiment will lead to initiation of the next re-lubrication event at the same time t*.

In a preferred method of re-lubrication according to the invention, the bearing arrangement, such as depicted in Figure 1, is re-lubricated while the bearing is running and the prescribed volume of grease $V_0$ for that bearing arrangement is divided into a number N of separate doses $\Delta V$. In one example, each grease dose has an equal volume whereby $\Delta V = V_0/N$. One advantage of adding grease to the bearing in incremental amounts is that the bearing may operate at normal speed during on-line re-lubrication. When the whole volume $V_0$ is replaced in one go, a low speed is prescribed in order to prevent excessive churning and high temperatures that would shorten the grease life.

The N separate doses are separated by a time interval, and this will be referred to as intermittent dosing. The method of calculating the re-lubrication interval t* using a history based re-lubrication interval or reliability value remains the same. The only difference lies in the definition of the reference time $t_0$ which defines the start of the historical period over which t* is determined.

In one example, the addition of a dose $\Delta V$ i.e. a dosing event is considered to be a relubrication event. The re-lubrication interval t* is then calculated over the period between dosing events, whereby a next dosing event in the sequence is initiated when the time since the previous dose equals t*/N.

Preferably, the re-lubrication interval t* is determined over a longer time history. In a particularly preferred example, the interval t* is determined based on the operating conditions recorded since the $N^{th}$ dosing event in the past (or since time 0 if there have been fewer than N dosing events). The re-lubrication interval t* is determined according to the invention and the next dose occurs when the elapsed time since the $N^{th}$ dosing event in the past equals $t^*$.

If only M dosing events have occurred in the past, whereby $M < N$ (M can be zero), then the next dosing event may be scheduled to occur at $(M + 1) \times t^*/N$.

In the case of intermittent dosing, whereby the re-lubrication interval t* is calculated over N dosing events, it is possible that a value for $t^*$ (or $(M + 1) \times t^*/N$) is calculated that is lower is than the time of the previous dosing event. This might occur if the most recent condition in which the bearing has operated is highly severe in comparison with earlier operating conditions. In such special cases, a new computation may be performed based on a new reference time $t_0$. In one example, the $(N - 1)^{th}$ (or $(M - 1)^{th}$) past dosing event is used as the new reference time $t_0$. If the same phenomenon occurs, then a new computation is needed back to the $(N - 2)^{th}$ (or $(M - 2)^{th}$) past dosing event... until a value for $t^*$ larger than the time of the previous dosing event is found. In a further example of the special case, the next dosing event may be scheduled to occur at t*/N.

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims.

**Claims**

1. Method of re-lubricating a grease-lubricated bearing arrangement that operates under varying conditions, the method comprising steps of determining a re-lubrication interval t* for the bearing arrangement and initiating a re-lubrication event, based on the determined interval t*, **characterised in that** the step of determining comprises:

   - measuring an operating condition $C_{(i)}$ of the bearing at a series of time intervals;
   - recording an amount of time $\Delta t_{(i)}$ spent in each operating condition $C_{(i)}$;
   and either

   (i) using each operating condition $C_{(i)}$ in the series as an input to a grease life model, to estimate a lubrication interval $t_{lub}(i)$ associated with each operating condition $C_{(i)}$; and
   using each estimated re-lubrication interval $t_{lub}(i)$ in the series and the associated amount of time $\Delta t_{(i)}$ to determine a value for t* that is a history- based lubrication interval $t_{lub}(t)$ calculated over the time t since a reference time to, according to the following formula:

$$t_{lub}(t) = \frac{1}{\sum_{i=1}^{n} \frac{\Delta t_i / t}{t_{lub}(i)}}$$

whereby the reference time $t_0$ is either zero or is the time at which a previous relubrication event occurred; or

(ii) associating each operating condition $C_{(i)}$ with a Weibull distribution for grease life; and

using the amount of time $\Delta t_{(i)}$ spent in each operating condition and the Weibull distribution associated with each operating condition $C_{(i)}$ to estimate a history-based reliability value R(t) at the time t since the reference time to, whereby the determined lubrication interval t* is the time at which the estimated reliability value R(t) reaches a predefined minimum value.

2.  Method according to claim 1, wherein the predefined minimum value for the history based reliability value R(t) is 0.99.

3.  Method according to claim 2, wherein the history-based Reliability value R(t) is extrapolated to predict the time t* at which R(t) will equal the predefined minimum value.

4.  Method according to any preceding claim, wherein the operating condition measured in step a) comprises one or more of bearing temperature, bearing speed and bearing load.

5.  Method according to any preceding claim, wherein a prescribed volume of grease $V_0$ is added to the bearing in a number N of individual doses $\Delta V$, whereby $N = V_0 / \Delta V$.

6.  Method according to claim 5, wherein the reference time $t_0$ is the time since a previous dose, whereby a next dose is initiated when the elapsed time since to equals t*/N.

7.  Method according to claim 5, wherein after the addition of a first sequence of N individual doses, the reference time $t_0$ is the time since the Nth dose in the past, such that the next dose in a sequence and each dose thereafter is added at the determined relubrication interval t*.

8.  Method according to claim 5, wherein the number of individual doses added to the bearing is M < N, and the reference time $t_0$ is equal to zero, whereby the next dose is initiated when $(\boldsymbol{M + 1}) \times \boldsymbol{t^*/N.}$

9.  Method according to any of claims 5 to 8, further comprising a step of monitoring an operating parameter X of the bearing arrangement in order to detect churning, the operating parameter being one of temperature, vibration, rotational speed and acoustic emission, wherein a scheduled dosing event is postponed if, prior to the event, a change in values of the monitored parameter exceeds a predetermined maximum rate $abs(dX/dt)_{max}$ or if a temperature is measured that exceeds a maximum threshold value $T_{max}$.

**Patentansprüche**

1.  Verfahren zur Nachschmierung einer fettgeschmierten Lageranordnung, die unter variierenden Bedingungen betrieben wird, wobei das Verfahren Schritte umfasst:

    Bestimmen eines Nachschmierintervalls t* für die Lageranordnung und Initiieren eines Nachschmierereignisses, auf der Basis des bestimmten Intervalls t*,
    **dadurch gekennzeichnet, dass** der Schritt der Bestimmung umfasst:

    - Messen einer Betriebsbedingung $C_{(i)}$ des Lagers in einer Serie von Zeitintervallen;
    - Aufzeichnen einer Zeitdauer $\Delta t_{(i)}$, die unter jeder Betriebsbedingung $C_{(i)}$ verstreicht;

    und entweder

    (i) Verwenden jeder Betriebsbedingung $C_{(i)}$ in der Serie als Eingabe in ein Fettlebensdauermodell, um ein Schmierintervall $t_{lub}(i)$ zu schätzen, das mit jeder Betriebsbedingung $C_{(i)}$ assoziiert ist; und Verwenden jedes geschätzten Nachschmierintervalls $t_{lub}(i)$ in der Serie und der assoziierten Zeitdauer $\Delta t_{(i)}$, um einen Wert für t* zu bestimmen, der ein verlaufsbasiertes Schmierintervall $t_{lub}(t)$ ist, das über die Zeit t seit einer Referenzzeit $t_0$ berechnet wird, gemäß der folgenden Formel:

$$t_{lub}(t) = \cfrac{1}{\sum_{i=1}^{n} \cfrac{\Delta t_i / t}{t_{lub}(t)}}$$

wodurch die Referenzeit $t_0$ entweder Null ist oder die Zeit ist, zu der ein vorheriges Nachschmierereignis aufgetreten ist;
oder
(ii) Assoziieren jeder Betriebsbedingung $C_{(i)}$ mit einer Weibull-Verteilung für die Fettlebensdauer; und Verwenden der Zeitdauer $\Delta t_{(i)}$, die unter jeder Betriebsbedingung $C_{(i)}$ verstreicht, und der Weibull-Verteilung, die mit jeder Betriebsbedingung $C_{(i)}$ assoziiert ist, um einen verlaufsbasierten Zuverlässigkeitswert R(t) zu der Zeit t seit der Referenzzeit $t_0$ zu schätzen, wodurch das geschätzte Schmierintervall t* die Zeit ist, zu welcher der geschätzte Zuverlässigkeitswert R(t) einen vordefinierten minimalen Wert erreicht.

2. Verfahren nach Anspruch 1,
   wobei der vordefinierte minimale Wert für den verlaufsbasierten Zuverlässigkeitswert R(t) 0,99 ist.

3. Verfahren nach Anspruch 2,
   wobei der verlaufsbasierte Zuverlässigkeitswert R(t) extrapoliert wird, um die Zeit t* vorherzusagen, zu der R(t) gleich dem vordefinierten minimalen Wert sein wird.

4. Verfahren nach einem der vorhergehenden Ansprüche,
   wobei die Betriebsbedingung, die in Schritt a) gemessen wird, eine oder mehrere von der Lagertemperatur, Lagergeschwindigkeit und Lagerlast umfasst.

5. Verfahren nach einem der vorhergehenden Ansprüche,
   wobei ein vorgeschriebenes Fettvolumen $V_0$ dem Lager in einer Anzahl N einzelner Dosen $\Delta V$ zugegeben wird, wodurch $N = V_0/AV$.

6. Verfahren nach Anspruch 5,
   wobei die Referenzzeit $t_0$ die Zeit seit einer vorherigen Dosis ist, wodurch eine nächste Dosis initiiert wird, wenn die vergangene Zeit seit $t_0$ gleich t*/N ist.

7. Verfahren nach Anspruch 5,
   wobei nach der Zugabe einer ersten Sequenz von N einzelnen Dosen die Referenzzeit $t_0$ die Zeit seit der N.ten Dosis in der Vergangenheit ist, so dass die nächste Dosis in einer Sequenz und jede Dosis danach in dem bestimmten Nachschmierintervall t* zugegeben wird.

8. Verfahren nach Anspruch 5,
   wobei die Anzahl einzelner Dosen, die dem Lager zugegeben werden, M < N ist, und die Referenzzeit $t_0$ gleich Null ist, wodurch die nächste Dosis initiiert wird, wenn $(\boldsymbol{M + 1}) \times \boldsymbol{t^*/N}$.

9. Verfahren nach einem der Ansprüche 5 bis 8,
   ferner umfassend einen Schritt: Überwachen eines Betriebsparameters X der Lageranordnung, um ein Planschen zu detektieren, wobei der Betriebsparameter einer ist von Temperatur, Vibration, Drehzahl und akustischer Emission, wobei ein geplantes Dosierungsereignis verschoben wird, wenn, vor dem Ereignis, eine Änderung in Werten des überwachten Parameters eine vorherbestimmte maximale Rate $abs(dX/dt)_{max}$ überschreitet, oder wenn eine Temperatur gemessen wird, die einen maximalen Schwellenwert $T_{max}$ überschreitet.

**Revendications**

1. Procédé de relubrification d'un agencement de paliers lubrifiés avec de la graisse qui fonctionne sous des conditions variables, le procédé comprenant des étapes de détermination d'un intervalle de relubrification t* pour l'agencement de paliers et de déclenchement d'un événement de relubrification, sur la base de l'intervalle déterminé t\*, **caractérisé en ce que** l'étape de détermination comprend les étapes suivantes:

mesurer une condition de fonctionnement $C_{(i)}$ du palier à une série d'intervalles de temps;
enregistrer une quantité de temps $\Delta t_{(i)}$ consacrée à chaque condition de fonctionnement $C_{(i)}$; et
soit:

(i) utiliser chaque condition de fonctionnement $C_{(i)}$ dans la série comme une entrée dans un modèle de durée de vie de graisse, afin d'estimer un intervalle de lubrification $t_{lub}(i)$ associé à chaque condition de fonctionnement $C_{(i)}$; et
utiliser chaque intervalle de relubrification estimé $t_{lub}(i)$ dans la série et la quantité de temps associée $\Delta t_{(i)}$ pour déterminer une valeur pour t\* qui est un intervalle de lubrification basé sur l'expérience $t_{lub}(t)$ calculé par rapport au temps t depuis un temps de référence $t_0$, selon la formule suivante:

$$t_{lub}(t) = \frac{1}{\sum_{i=1}^{n} \frac{\Delta t_i / t}{t_{lub}(i)}}$$

dans laquelle le temps de référence $t_0$ est soit zéro

soit le temps auquel un événement de relubrification s'est produit;
soit:

(ii) associer chaque condition de fonctionnement $C_{(i)}$ à une distribution de Weibull pour la durée de vie de la graisse; et
utiliser la quantité de temps $\Delta t_{(i)}$ consacrée à chaque condition de fonctionnement et la distribution de Weibull associée à chaque condition de fonctionnement $C_{(i)}$ pour estimer une valeur de fiabilité basée sur l'expérience R(t) au temps t depuis le temps de référence $t_0$, dans lequel l'intervalle de lubrification déterminé t\* est le temps auquel la valeur de fiabilité estimée R(t) atteint une valeur minimum prédéfinie.

2. Procédé selon la revendication 1, dans lequel la valeur minimum prédéfinie pour la valeur de fiabilité basée sur l'expérience R(t) est 0,99.

3. Procédé selon la revendication 2, dans lequel la valeur de fiabilité basée sur l'expérience R(t) est extrapolée afin de prédire le temps t\* auquel R(t) sera égale à la valeur minimum prédéfinie.

4. Procédé selon l'une quelconque des revendications précédentes, dans lequel la condition de fonctionnement mesurée à l'étape a) comprend un ou plusieurs paramètre(s) parmi la température de palier, la vitesse de palier et la charge de palier.

5. Procédé selon l'une quelconque des revendications précédentes, dans lequel un volume de graisse prescrit $V_0$ est ajouté au palier en un nombre N de doses individuelles $\Delta V$, où $N = V_0/\Delta V$.

6. Procédé selon la revendication 5, dans lequel le temps de référence $t_0$ est le temps depuis une dose précédente, dans lequel une dose suivante est amorcée lorsque le temps écoulé depuis $t_0$ est égal à t\*/N.

7. Procédé selon la revendication 5, dans lequel, après l'addition d'une première séquence de N doses individuelles, le temps de référence $t_0$ est le temps depuis la N$^{ième}$ dose dans le passé, de telle sorte que la dose suivante dans une séquence et chaque dose suivante soient ajoutées à l'intervalle de relubrification déterminé t\*.

8. Procédé selon la revendication 5, dans lequel le nombre de doses individuelles ajoutées au palier est M < N, et le temps de référence $t_0$ est égal à zéro, moyennant quoi la dose suivante est amorcée lorsque (M + 1) x t\*/N.

9. Procédé selon l'une quelconque des revendications 5 à 8, comprenant en outre une étape de surveillance d'un paramètre de fonctionnement X de l'agencement de paliers dans le but de détecter une turbulence, le paramètre de fonctionnement étant un paramètre parmi la température, la vibration, la vitesse de rotation et l'émission acoustique, dans lequel un événement de dosage programmé est postposé si, avant l'événement, un changement dans les valeurs du paramètre surveillé dépasse un taux maximum prédéterminé $abs(dX/dt)_{max}$ ou s'il est mesuré une température qui dépasse une valeur de seuil maximum $T_{max}$.

Figure 1

Figure 2a

Figure 2b

**EP 3 088 790 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120221153 A